# EUROPÄISCHE PATENTSCHRIFT

(11) **EP 2 012 093 B1**
(45) Veröffentlichungstag und Bekanntmachung des Hinweises auf die Patenterteilung: **01.03.2017**
(21) Anmeldenummer: 08007657.3
(22) Anmeldetag: 18.04.2008
(51) Int. Cl.: G01D 4/00

(54) **System und Verfahren zum elektronischen Fernauslesen von Verbrauchsdaten**
System and method for remote access of consumption information
Système et procédé de lecture électronique distante de données utilitaires

(30) Priorität: 04.07.2007 DE 102007031100; 03.08.2007 DE 102007036687
(43) Veröffentlichungstag der Anmeldung: 07.01.2009
(73) Patentinhaber: SWM Services GmbH, 80287 München (DE)
(72) Erfinder: Huber, Johann Baptist, 81671 München (DE)
(74) Vertreter: Liesegang, Eva

(56) Entgegenhaltungen:
- WO-A1-2006/017671
- DE-A1- 10 032 755
- GB-A- 2 297 663
- US-A1- 2006 106 741

## Beschreibung

Die vorliegende Erfindung betrifft ein System zum elektronischen Fernauslesen von Verbrauchsdaten nach dem Oberbegriff des Anspruchs 1 sowie ein Verfahren zum elektronischen Fernauslesen von Verbrauchsdaten nach dem Oberbegriff des Anspruchs 11. Ferner betrifft sie einen fernauslesbaren Stromzähler.

Ein Versorger, der einer Vielzahl von Verbrauchern Verbrauchermedien wie beispielsweise Strom, Gas, Wasser und/oder Fernwärme bereitstellt, muß jedem dieser Verbraucher individuell seinen Verbrauch in Rechnung stellen. Dazu sind herkömmlicherweise verbraucherseitig Verbrauchsmeßgeräte installiert, die üblicherweise als "Verbrauchszähler" bezeichnet werden und den individuellen Verbrauch für das betreffende Medium für den betreffenden Verbraucher anzeigen. Um den Verbrauch zu ermitteln, muß der Versorger in regelmäßigen Abständen einen Mitarbeiter zum Verbraucher schicken, um den Zählerstand auszulesen oder zumindest zu kontrollieren. Dies stellt für den Versorger einen erheblichen Aufwand und erhebliche Kosten dar, die letztlich der Verbraucher zu tragen hat.

Um das Auslesen vor Ort zu vermeiden, sind fernauslesbare Zähler entwickelt worden, bei denen die Zählstandsinformationen automatisch durch elektronische Datenverarbeitung und Datenkommunikationstechnologie zum Versorger übertragen werden. Die Technologie fernauslesbarer Zähler wird oft auch als "AMR" (Automatic Meter Reading) bezeichnet.

Die Vorteile der Zähler-Fernauslesung liegen auf der Hand: Dazu gehören einerseits die Einsparungen dadurch, daß der Versorger sich um die oben erwähnte Ablesung oder Kontrolle des Zählstandes beim Verbraucher nicht mehr zu kümmern braucht. Dies ist um so wichtiger, als im Zuge der Marktliberalisierung Verbraucher zunehmend in der Lage und bereit sind, ihren Verbraucher zu wechseln. Ein Versorger, der in einem gewissen regionalen Bereich einen hohen Marktanteil hat, kann das Auslesen der Zähler beim Verbraucher noch relativ effizient organisieren, ein neuer Versorger, der erst einen relativ geringen Marktanteil hat, wird vor ungleich größere organisatorische Schwierigkeiten und Kosten gestellt.

Ein weiterer großer Vorteil der elektronischen Fernauslesung besteht darin, daß der Versorger zeitnah, wenn nicht sogar in Echtzeit feststellen kann, wie viel eines Verbrauchsmedium ein bestimmter Verbraucher benötigt. Dadurch kann der Versorger besser planen, die Bedürfnisse seiner Verbraucher besser verstehen und sein Angebot darauf ausrichten.

Ein besonders großer Vorteil der elektronischen Fernauslesung läßt sich bei Stromzählern erreichen. Für einen Stromversorger wäre es außerordentlich vorteilhaft, wenn er quasi flächendeckend und zeitnah über den aktuellen Stromverbrauch informiert wäre, weil dies ermöglicht, jederzeit die Stromversorgung zu sichern, ohne unnötig große Sicherheitsreserven bereithalten zu müssen. Gegenwärtig wird bekanntlich Strom mit einer wesentlichen Überkapazität erzeugt, um jederzeit den aktuellen Bedarf decken zu können. Wenn man den konkreten aktuellen Bedarf zeitnah und einfach ermitteln könnte, müßte deutlich weniger Strom zur Reserve erzeugt werden, wodurch sehr effizient Energie gespart werden könnte.

Diesen Vorteilen stehen jedoch gewichtige Nachteile gegenüber, die der Grund dafür sind, daß die Fernauslesung gegenwärtig noch nicht weit verbreitet ist. Dazu gehören in erster Linie die erhöhten Geräte- und Installationskosten. Eines der größten Hemmnisse für einen Umstieg auf Fernauslesung besteht darin, daß jeder gegenwärtig existierende Verbraucher ja bereits mit funktionierenden Zählern ausgestattet ist und sicherlich nicht bereit wäre, die hohen Kosten einer Umrüstung direkt oder indirekt zu tragen, wenn er im Besitz eines funktionierenden Systems ist.

Die DE 100 32 755 A1 offenbart ein an einem Verbrauchszähler zu installierendes Vorsatzgerät mit einer elektrooptischen Sensoreinrichtung zur optischen Erfassung der sichtbaren Zählwerksanzeige eines Verbrauchszählers und zur Umwandlung des optischen Signal in ein elektronisches Signal für einen Signalcodierer, der durch eine OCR-Einheit gebildet ist. Das Ausgangssignal der OCR-Einheit, welches dem Verbrauchszählerstand entspricht, kann über eine DFÜ-Schnittstelle des Vorsatzgerätes zum Zwecke der Fernablesung übertragen werden.

US 2006/0106741 A1 offenbart ein Verbrauchs-Überwachungssystem, das dem Nutzer helfen soll, den Verbrauch von Strom, Gas oder Wasser zu überwachen. Das System umfasst eine Datenquelle, einen Prozessor, der mit der Datenquelle verbunden ist, und eine Anzeigeeinheit, die mit dem Prozessor gekoppelt ist. Die Anzeigeeinheit ist im Haus des Nutzers vorgesehen. Die aktuellen Verbrauchsdaten des Nutzers können an den Prozessor übertragen werden. Dazu können OCR-Module an klassischen Verbrauchszählern angebracht werden, mit denen die Zählstände ausgewertet und an den Prozessor übertragen werden. Die Darstellung der Verbrauchswerte soll dem Nutzer helfen, seinen Verbrauch an Strom, Wasser und/oder Gas zu analysieren und durch gezieltes Sparen zu verringern.

Die WO 2006/017671 A1 offenbart ein System zur Information eines Verbrauchers von Strom, Gas, Wasser etc. bezüglich Verbrauch und Kosten. Das System umfasst eine Mehrzahl von digitalen Verbrauchszählern, die geeignet sind, ein Verbrauchssignal zu erzeugen, welches den aktuellen Verbrauch repräsentiert. Das System umfasst ferner eine Informations- und Steuerungseinrichtung, die einen Prozessor, einen Speicher, einen Taktgeber und eine Nutzerschnittstelle umfasst, über die Information eingegeben und ausgegeben werden kann. Das System umfasst eine erste Datenübertragungsleitung zwischen den Verbrauchsmessern und der Informations- und Steuerungseinrichtung, und eine weitere Datenübertragungsleitung zwischen der Informations- und Steuerungseinrichtung und einem Versorger. Als Schnittstelle für die Übertragung von Daten zu den einzelnen Verbrauchszählern kann eine Schnittstelle dienen, die in einem fernauslesbaren Stromzähler vorgesehen ist.

Die GB 2297663A offenbart ein System zum Fernauslesen von digitalen Verbrauchszählern, mit einem Datensammelpunkt, der mit einem Telekommunikationsnetzwerk verbunden ist.

Das System umfasst ferner einen Datenkanal zwischen dem Telekommunikationsnetzwerk und einem jeden der Verbrauchszähler, eine zugehörige Verbrauchszähler-Messeinheit, die mit dem verbraucherseitigen Ende des Datenkanals verbunden ist und einen ersten FunkSender/Empfänger umfasst, und für jeden der Verbrauchszähler einen zweiten FunkSender/Empfänger, der mit dem ersten Funk-Sender/Empfänger kommuniziert. Verbrauchsdaten können von den Verbrauchszählern über die Funkverbindung zwischen den FunkSender/Empfängern und das Telekommunikationsnetzwerk zu dem Datensammelpunkt gesendet werden.

Der vorliegenden Erfindung liegt die Aufgabe zugrunde, ein System und ein Verfahren zum elektronischen Fernauslesen von Verbrauchsdaten bereitzustellen, welche sich mit sehr geringen Anfangsinvestitionskosten implementieren lassen.

Diese Aufgabe wird durch ein System mit den Merkmalen des Anspruchs 1, einen fernauslesbaren Stromzähler nach Anspruch 9 sowie einem Verfahren mit den Merkmalen des Anspruchs 11 gelöst. Vorteilhafte Weiterbildungen sind in den abhängigen Ansprüchen angegeben.

Das System zum elektronischen Fernauslesen von Verbrauchsdaten nach der Erfindung umfaßt eine Mehrzahl von fernauslesbaren Stromzählern, die verbraucherseitig vorgesehen sind und die über einen Versorger-Datenkanal kommunikativ mit einer Auslesestelle eines Versorgers verbunden sind, und die eine Kommunikationseinrichtung umfassen, die geeignet ist, Daten über den Versorger-Datenkanal zu der Auslesestelle zu kommunizieren. Hier und in der folgenden Offenbarung ist der Begriff "Datenkanal" weit auszulegen und kann sowohl einen physischen Datenkanal, wie beispielsweise eine optische oder elektrische Datenleitung, als auch einen logischen Datenkanal, wie beispielsweise ein Frequenzband innerhalb einer Funkübertragung bezeichnen. Ferner umfaßt das System erfindungsgemäß eine Mehrzahl von OCR-Modulen, welche geeignet sind, mit Gas- und/oder Wasser- und/oder Fernwärme- und/oder anderen Verbrauchszählern (z.B. nicht fernauslesbaren Stromzählern) gekoppelt zu werden und deren Zählerstände mittels optischer Zeichenerkennung auszulesen, wobei ein jedes OCR-Modul über einen lokalen Datenkanal kommunikativ mit einem zugehörigen fernauslesbaren Stromzähler verbunden ist, und die Kommunikationseinrichtung des Stromzählers geeignet ist, die von einem OCR-Modul über den lokalen Datenkanal gesendeten Daten über den Versorger-Datenkanal zum Versorger zu senden.

Die Abkürzung "OCR" bezeichnet eine optische Zeichenerkennung und basiert auf dem englischen Fachausdruck "Optical Character Recognition". Ein OCR-Modul, wie es in der vorliegenden Erfindung verwendet wird, ist ein Modul, das mit einem herkömmlichen Zähler gekoppelt werden kann und dessen Zählerstand auslesen kann, indem es die Zeichen auf der Anzeige des Zählers erkennt. Solche OCR-Module sind beispielsweise von der Firma Xemtec erhältlich und können einfach auf einem herkömmlichen Zähler so befestigt (z.B. aufgeklebt) werden, daß der lichtempfindliche Abschnitt des OCR-Moduls der Anzeige des Zählers, z.B. einem mechanischen Rollenzählwerk, gegenüberliegt.

Ein derartiges OCR-Modul läßt sich äußerst kostengünstig herstellen. Nach dem erfindungsgemäßen System können also sämtliche Versorgungszähler eines Verbrauchers fernauslesbar gestaltet werden, und dies zu Investitionskosten, die nur wenig höher liegen als die Investitionskosten, die anfielen, wenn nur ein fernauslesbarer Stromzähler installiert würde. Denn die bereits vorhandenen weiteren Verbrauchszähler können einfach weiterverwendet werden und müssen lediglich durch ein kostengünstiges OCR-Modul ergänzt werden.

Wie eingangs erwähnt wurde, hat ein fernauslesbarer Stromzähler zwei wesentliche Vorteile. Der eine Vorteil besteht prinzipiell in den verringerten Betriebskosten, weil das Ablesen vor Ort wegfällt, der zweite besteht in der Möglichkeit, den tatsächlichen aktuellen Bedarf zeitnah übermitteln zu können. Der erste Vorteil besteht allerdings deshalb nur "prinzipiell", weil sich in der Praxis die Betriebskosten durch den fernauslesbaren Stromzähler allein noch nicht verringern lassen, weil immer noch die übrigen Verbrauchszähler, beispielsweise für Gas, Wasser oder Fernwärme, vor Ort abgelesen werden müssen, und dies oft durch denselben Versorger. Wenn aber die übrigen Verbrauchszähler ohnehin vor Ort abgelesen werden müssen, egal ob durch denselben Versorger wie den Stromversorger oder einen anderen Versorger, kann der Stromzähler auch gleich mit abgelesen werden.

Ein wesentlicher Effizienzgewinn wird erst dann erreicht, wenn sämtliche Verbrauchszähler fernauslesbar gestaltet werden. Die Investitionskosten, die entstünden, wenn die übrigen Verbrauchszähler auch durch herkömmliche fernauslesbare Verbrauchszähler ausgetauscht würden, sind jedoch inakzeptabel hoch und insbesondere bei einem bestehenden funktionierenden System nicht vermittelbar.

Das System und das Verfahren der vorliegenden Erfindung hingegen gestatten es, für Investitionskosten, die unwesentlich höher liegen als diejenigen für das Bereitstellen eines fernauslesbaren Stromzählers, sämtliche Verbrauchszähler eines Verbrauchers oder sogar mehrerer Verbraucher fernauslesbar zu gestalten, so daß der oben genannte erste Vorteil des fernauslesbaren Stromzählers, nämlich die verringerten Betriebskosten, nicht nur prinzipiell sondern auch tatsächlich zu Buche schlägt.

Technisch beruhen die äußerst geringen zusätzlichen Investitionskosten auf zwei Aspekten. Zum einen ermöglicht es die Kommunikationseinrichtung des fernauslesbaren Stromzählers, daß derselbe Versorger-Datenkanal, der für die Stromverbrauchsdaten verwendet wird, auch für die übrigen Verbrauchsdaten verwendet werden kann. Dadurch lassen sich Kosten gegenüber einer Lösung mit einer Mehrzahl paralleler Versorger-Datenkanäle verringern.

Der erste Aspekt, d.h. die gemeinsame Verwendung des Versorger-Datenkanals auch für die Verbrauchsdaten der übrigen Verbrauchszähler, setzt voraus, daß die Verbrauchsdaten der übrigen Verbrauchszähler zur Kommunikationseinrichtung des Stromzählers übertragen werden. Die naheliegende Weise, dies zu bewerkstelligen, bestünde darin, bestehende Verbrauchszählers so zu modifizieren, daß die Verbrauchsdaten elektronisch aus diesen abgezogen werden und auf irgendeine geeignete Weise zur Kommunikationseinrichtung des Stromzählers übertragen werden. Dies würde aber einen Eingriff in die Architektur der weiteren bestehenden Zähler bedeuten, der äußert aufwendig wäre, zumal diese weiteren bestehenden Zähler auch für das gleiche Verbrauchsmedium nicht notwendigerweise identisch sind und daher eine universelle Lösung nicht möglich ist und weil ein Eingriff in einen bestehenden Zähler auch wegen der Manipulationsgefahr stets kritisch ist. Bei analogen, mechanischen Zählern, von denen viele gegenwärtig im Betrieb sind, wäre ein derartiger elektronischer Dateneingriff ohnehin nicht möglich.

Statt dessen sieht das System der Erfindung vor, die Verbrauchsinformationen von den übrigen Zählern auf dem Wege der optischen Zeichenerkennung zum Stromzähler zu übertragen. Die Verwendung der OCR-Technologie ist der zweite technische Aspekt, der zu den verringerten Kosten beiträgt. Die optische Zeichenerkennung mag auf den ersten Blick wie ein Umweg erscheinen, da die Information erst optisch erfaßt und dann elektronisch übertragen wird, ist aber tatsächlich wesentlich einfacher und kostengünstiger als jeder Versuch, die Daten elektronisch aus den bestehenden Zählern abzuziehen. Eichrechtlich spricht man von der durch die OCR-Technologie bereitgestellten Ansteuerung von einer "Zählerstandswiederholung" bzw. "Meßwertwiederholung" gemäß PTB-Anforderungen 50.7, die eichrechtlich völlig unbedenklich ist, da dabei kein neuer Meßwert gebildet, sondern ein bereits vorliegender Meßwert eines geeichten Zählers (z.B. der Stand eines mechanischen Rollenzählerwerks) lediglich wiederholt wird. Weiterhin ist das Abziehen des Zählerstands mittels der OCR-Technologie völlig rückwirkungsfrei, da es keinerlei meßtechnischen Einfluß auf die Meßgenauigkeit oder die Meßbeständigkeit des Zählers ausübt. Die "Zusatzeinrichtung OCR-Modul" ist aufgrund der beschriebenen Eigenschaft der "Rückwirkungsfreiheit" nach Eichordnung - Allgemeine Vorschriften §9 "Zusatzeinrichtungen" Abs. 1 und Abs. 3 von der Eichpflicht ausgenommen, was einen weiteren wirtschaftlichen Vorteil darstellt.

Ein besonderer technischer Vorteil der Verwendung der OCR-Module besteht darin, daß sie universal einsetzbar sind, also nicht an die spezielle Technik des betreffenden Zählers angepaßt werden müssen, sondern nur insoweit, als sie mit verschiedenen Layouts der Anzeige umgehen können müssen, was aber technisch unproblematisch ist. Außerdem müssen die bestehenden Zähler nicht verändert werden, sondern sie können unverändert und verplombt bleiben wie sie sind, ohne Gefahr von Manipulationen.

Somit gestatten das System und das Verfahren der Erfindung es, sämtliche Verbrauchszähler eines Verbrauchers und sogar mehrerer benachbarter Verbraucher zu sehr moderaten Kosten fernauslesbar zu gestalten.

Vorzugweise wird der lokale Daten-Kanal zwischen der Kommunikationseinrichtung des Stromzählers und den OCR-Modulen durch eine Funkübertragung gebildet. Dadurch lassen sich die Investitionskosten weiter verringern, weil keine eigenständigen Leitungen verlegt werden müssen.

In einer vorteilhaften Weiterbildung umfaßt die Kommunikationseinrichtung des fernauslesbaren Stromzählers eine Schnittstelle zum Übertragen von Daten auf die Niederspannungsleitung, über die der Verbraucher mit Strom versorgt wird, und wird zumindest ein Abschnitt des genannten Versorger-Datenkanals durch die Niederspannungs-Stromleitung gebildet. Eine derartige Datenübertragung über das Stromnetz ist an sich bekannt und wird üblicherweise als "Power Line Communication" (PLC) bezeichnet. Vorzugsweise umfaßt der Versorger-Datenkanal ferner einen Konzentrator, an dem die über die Niederspannungs-Stromleitung gesendeten Verbrauchsdaten mehrerer Verbraucher gesammelt werden. Der Konzentrator ist dabei vorzugsweise in einer Transformatorstation vorgesehen.

Durch die Verwendung der PLC-Technologie läßt sich der Teil des Versorger-Datenkanals bis zum Konzentrator äußerst einfach und kostengünstig bereitstellen, da bereits bestehende Leitungen zur Datenübertragung verwendet werden, und der Stromzähler ohnehin mit der Niederspannungs-Stromleitung verbunden ist.

Das System als Ganzes wird typischerweise eine Vielzahl von Konzentratoren umfassen, und zumindest einige, vorzugsweise sämtliche der Konzentratoren sind vorzugsweise mit einer Kommunikationseinrichtung versehen, die geeignet ist, die gesammelten Verbrauchsdaten zu einem Datenverarbeitungszentrum des Versorgers zu senden. In einer besonders vorteilhaften Ausführungsform wird diese Konzentrator-Kommunikationseinrichtung durch eine Mobilfunkeinrichtung gebildet. In dieser Ausführungsform ist der Hardware-Aufwand für die Bereitstellung des Versorger-Datenkanals minimal, so daß wiederum die Investitionskosten, insbesondere im Vergleich zu alternativen Möglichkeiten unter Verwendung von Telefonleitungen, äußert günstig sind.

In einer besonders vorteilhaften Weiterbildung ist die Stromzähler-Kommunikationseinrichtung durch ein Kommunikationsmodul gebildet, welches baulich vom übrigen Teil des Stromzählers getrennt ist. Derartige Kommunikationsmodule sind bei Stromzählern an sich bekannt, jedoch nicht in einer Ausführung, die gleichzeitig die Funktion eines Gateways für die Verbrauchsdaten der übrigen Zähler bereitstellt. Ein Vorteil solcher baulich getrennter Module besteht darin, daß sie ausgetauscht oder modifiziert werden können, ohne den Zähler als solchen öffnen zu müssen, was stets eine Manipulationsgefahr beinhaltet. In einer vorteilhaften Weiterbildung ist das Kommunikationsmodul lösbar, insbesondere durch Steckverbindung mit dem Stromzähler verbunden.

Zum besseren Verständnis der vorliegenden Erfindung wird im folgenden auf das in den Zeichnungen dargestellte bevorzugte Ausführungsbeispiel Bezug genommen, das anhand spezifischer Terminologie beschrieben ist. Es sei jedoch darauf hingewiesen, daß der Schutzumfang der Erfindung dadurch nicht eingeschränkt werden soll.

Die Figuren zeigen Ausführungsbeispiele der Erfindung, nämlich
- Fig. 1: eine schematische Darstellung eines Systems zum elektronischen Fernauslesen von Verbrauchsdaten; und
- Fig. 2: ein Blockdiagramm eines fernauslesbaren Stromzählers nach einer Weiterbildung der Erfindung.

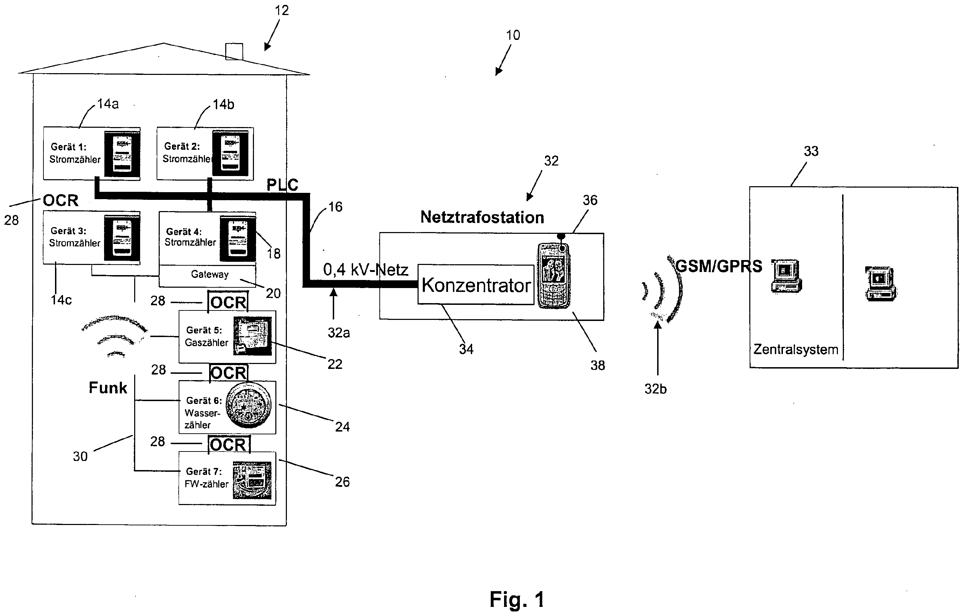

In Fig. 1 ist ein Blockschaltbild eines Systems zum elektronischen Fernauslesen von Verbrauchsdaten nach einer Weiterbildung der Erfindung gezeigt. In Fig. 1 ist mit Bezugzeichen 12 ein Mehrfamilienhaus schematisch dargestellt, in dem beispielsweise vier Parteien wohnen, die im folgenden jeweils als "Verbraucher" bezeichnet werden.

Drei der Verbraucher verfügen über einen herkömmlichen, nicht fernauslesbaren Stromzähler 14a, 14b bzw. 14c, die mit einer 0,4 kV Niederspannungsleitung 16 verbunden sind, und zum Messen des Stromverbrauchs des zugehörigen Verbrauchers auf herkömmlicher Weise bestimmt sind.

Der vierte Verbraucher verfügt über einen fernauslesbaren Stromzähler 18, der eine Kommunikationseinrichtung 20 umfaßt, die unten näher beschrieben wird.

Außerdem befinden sich in dem Haus 12 Verbrauchszähler für weitere Verbrauchsmedien, von denen exemplarisch ein Gaszähler 22, ein Wasserzähler 24 und ein Fernwärmezähler 26 dargestellt sind. Bei diesen Verbrauchszählern 22, 24, 26 handelt es sich um herkömmliche, an sich nicht fernauslesbare Zähler, wie sie gegenwärtig üblicherweise in Haushalten installiert sind.

Der Gaszähler 22, der Wasserzähler 24, der Fernwärmezähler 26 und der herkömmliche Stromzähler 14c sind jeweils mit einem OCR-Modul 28 versehen, das mit dem zugehörigen Zähler 14c, 22, 24, 26 gekoppelt ist und geeignet ist, dessen Zählerstand durch optische Zeichenerkennung auszulesen. Diese OCR-Module 28 können einfach an herkömmlichen Zählern befestigt werden, beispielsweise auf deren Gehäuse so aufgeklebt werden, daß der lichtempfindliche Teil des OCR-Moduls der Zähleranzeige gegenüberliegt. Die OCR-Module 28 haben ferner eine eigene Stromversorgung mittels Batterie. Derartige OCR-Module sind beispielsweise von der Firma Xemtec erhältlich.

Jedes OCR-Modul 28 verfügt über einen Funksender, der es erlaubt, eine Zählerkennung den Zählerstand und somit die Verbrauchsdaten des zugehörigen Zählers 14c, 22, 24, 26, sowie gegebenenfalls weitere relevante Daten per Funk zu der Kommunikationseinrichtung 20 des fernauslesbaren Stromzählers 18 zu senden. Diese Funkverbindung zwischen den OCR-Modulen 28 und der Kommunikationseinrichtung 20 stellt einen lokalen Datenkanal 30 bereit, welcher in Fig. 1 durch eine durchgezogene Linie schematisch dargestellt ist. Dieser Datenkanal ist insofern lokal, als er auf das Haus 12 beschränkt ist. Es ist auch möglich, daß sich ein derartiger lokaler Datenkanal 30 über mehrere benachbarte Häuser erstreckt, je nach Stärke der Funksender der OCR-Module 28. Der lokale Datenkanal 30 ist jedoch insofern lokal, als die Verbrauchsdaten der mit ihm verbundenen Zähler 22, 24, 26, 14c über ihn allein nicht bis zum Versorger übertragen werden können.

Die Kommunikationseinrichtung 20 des fernauslesbaren Stromzählers 18 umfaßt einen Sender/Empfänger oder Empfänger zum Empfangen der Funksignale der OCR-Module 28 und kann die Verbrauchsdaten der Zähler 14c, 22, 24, 26 empfangen und puffern. Die Kommunikationseinrichtung kann auch eine geeignete Datenverarbeitungsschnittstelle umfassen, z.B. einen M-Bus, über welche die von einem externen Empfänger zum Empfangen der Funksignale der OCR-Module empfangenen Daten eingelesen werden. Dieser externe Funk-Empfänger wäre typischerweise in unmittelbarer Nähe zum Kommunikationsmodul 20 angeordnet, z.B. direkt neben dem fernauslesbaren Stromzähler, auf dessen Gehäuse oder Klemmdeckel oder in dessen Klemmdeckel montiert oder eingesteckt. Dadurch ist es insbesondere möglich, die Elektrizitätsversorgung für den externen Funk-Empfänger vom fernauslesbaren Stromzähler zu beziehen. Diese Verbrauchsdaten kann der fernauslesbare Stromzähler 18 dann unter Verwendung der Kommunikationseinrichtung 20 über einen Versorger-Datenkanal 32 zu einer Auslesestelle 33 eines Versorgers kommunizieren. Der Versorger-Datenkanal besteht im gezeigten Ausführungsbeispiel aus zwei Abschnitten. Der erste Abschnitt 32a wird durch die Niederspannungsleitung 16 gebildet, über welche der fernauslesbare Stromzähler 18 sowohl seine eigene Verbrauchsdaten als auch diejenigen der mit ihm über den lokalen Kanal 30 verbundenen Zähler 14c, 22, 24, 26 mittels Power Line Communication (PLC) zu einem Konzentrator 34 überträgt, welcher vorzugsweise in einer Netztransformatorstation 36 vorgesehen ist.

Obwohl dies in Fig. 1 nicht gezeigt ist, laufen in der Netztransformatorstation 36 eine Vielzahl von Niederspannungsleitungen ähnlich der Niederspannungsleitung 16 zusammen, über die auf gleiche Weise Verbrauchsdaten mittels PLC übertragen werden. Diese Verbrauchsdaten werden im Konzentrator 34 gespeichert, und zu definierten Zeitpunkten mit Hilfe einer Mobilfunkeinrichtung 38 zur Auslesestelle 33 des Versorgers übertragen. Vorzugsweise sendet dabei die Mobilfunkeinrichtung 38 unter Verwendung des GSM-Standards zu einer GPRS-Basisstation. Von der GPRS-Basisstation können die Verbraucherdaten über das Internet zu der Auslesestelle 33 gesendet werden. Die GSM/GPRS-Verbindung zwischen der Mobilfunkeinrichtung 38 und der Auslesestelle 33 des Versorgers bildet in einer solchen Ausführungsform den zweiten Teil 32b des Versorger-Datenkanals.

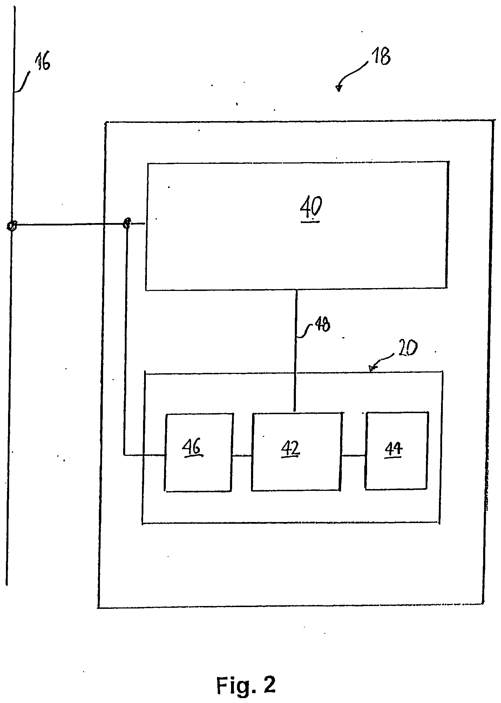

In Fig. 2 ist der fernauslesbare Stromzähler 18 in einem schematischen Blockdiagramm mehr im Detail gezeigt. Wie in Fig. 2 zu sehen ist, umfaßt der fernauslesbare Stromzähler 18 in dieser Ausführungsform einen Verbrauchszählerabschnitt 40, der mit der Niederspannungsleitung 16 verbunden ist und dazu bestimmt ist, den Stromverbrauch zu ermitteln. Der Verbrauchszählerabschnitt 40 ist ähnlich wie bei den herkömmlichen Stromzählern 14a, 14b, 14c, und er ist insbesondere verplombt und für Dritte nicht zugänglich, um Manipulationen zu vermeiden.

Ferner umfaßt der fernauslesbare Stromzähler 18 die in Zusammenhang mit Fig. 1 erwähnte Kommunikationseinrichtung 20, die in der in Fig. 2 gezeigten Ausführungsform als ein Modul ausgebildet ist, welches an einer vorgesehenen Stelle des fernauslesbaren Stromzählers 18 einsteckbar ist. Dieses Kommunikationsmodul 20 umfaßt eine elektronische Datenverarbeitungseinheit 42, einen Empfänger 44 zum Empfangen der Funksignale von den OCR-Modulen 28 sowie eine PLC-Schnittstelle 46.

Die Datenverarbeitungseinheit 42 empfängt die Stromverbrauchsdaten des fernauslesbaren Zählers 18 über eine Signalleitung 48 von dem Verbrauchszählerabschnitt 40. Ferner empfängt die elektronische Datenverarbeitungseinheit 42 die Verbrauchswerte weiterer Zähler über den lokalen Datenkanal 30 (siehe Fig. 1), dessen eines Ende der Funkempfänger 44 bildet. Die elektronische Datenverarbeitungseinheit 42 überträgt die Verbrauchsdaten über die PLC-Schnittstelle 46 auf die Niederspannungsleitung 16, und somit auf den Versorger-Datenkanal 32.

Wie oben erwähnt, kann in einer alternativen Ausführungsform ein externer Empfänger vorgesehen sein, welcher mit dem Kommunikationsmodul über eine geeignete Datenverarbeitungsschnittstelle, z.B. einen M-Bus, kommuniziert. In dieser Ausführung würde das Ende des lokalen Datenkanals 30 durch den externen Empfänger bzw. die genannte Datenverarbeitungsschnittstelle gebildet.

In einer vorteilhaften Weiterbildung ist der fernauslesbare Stromzähler 18 für eine bidirektionale Kommunikation ausgelegt. Dabei kann der fernauslesbare Stromzähler 18 über denselben Versorger-Datenkanal 32, über den er Verbrauchsdaten zur Auslesestelle 33 sendet, auch Signale von der Auslesestelle 33 empfangen. In dieser Ausführungsform wäre die PLC-Schnittstelle also für eine bidirektionale Kommunikation ausgelegt.

Ferner kann auch der lokale Datenkanal 30 für eine bidirektionale Kommunikation ausgelegt sein. Dabei hätten die OCR-Module 28 anstelle eines einfachen Senders einen Sender/Empfänger und die Kommunikationseinrichtung 44 hätte anstelle eines einfachen Empfängers ebenfalls einen Sender/Empfänger. Durch die bidirektionale Kommunikation über den lokalen Datenkanal 30 lassen sich dann die einzelnen OCR-Module 28 von außen ansteuern. Insbesondere ist es möglich, ein in einem Ruhe- oder Schlafmodus befindliches OCR-Modul 28 durch einen "wake-up-call" von außen in einen aktiven Modus zu versetzen, in dem es den zugehörigen Zählerstand ausliest und zum fernauslesbaren Stromzähler 18 kommuniziert. Dadurch werden die mit OCR-Modulen 28 versehenen Verbrauchszähler in Echtzeit fernauslesbar.

Wie der Beschreibung des Ausführungsbeispiels zu entnehmen ist, ist das beispielhafte System 10 zum elektronischen Fernauslesen von Verbrauchsdaten, in dem gezeigten Ausführungsbeispiel von Strom-, Gas-, Wasser- und Fernwärme-Daten, einfach und kostengünstig zu realisieren. Eine Vielzahl von Zählern 14c, 18, 22, 24, 26 für unterschiedliche Verbrauchsmedien sind über denselben Versorger-Datenkanal 32 fernauslesbar, der in der vorteilhaften Weiterbildung von Fig. 1 seinerseits mit minimalem Hardware-Aufwand realisierbar ist.

Die OCR-Technologie erlaubt es, selbst rein analoge bzw. mechanische Zähler in die Fernauslesung einzubeziehen, und dies mit relativ geringen Investitionskosten, da sich die OCR-Module 28 relativ leicht und preiswert herstellen lassen. Tatsächlich liegen die Investitionskosten weit unter denjenigen, die nötig wären, wenn sämtliche Verbrauchszähler durch fernauslesbare ersetzt würden. Insbesondere ist es sogar möglich, herkömmliche Stromzähler wie beispielsweise den Stromzähler 14c in das System zu integrieren, indem auch diese mit einem OCR-Modul 28 versehen werden.

Obgleich in den Zeichnungen und der vorhergehenden Beschreibung ein bevorzugtes Ausführungsbeispiel aufgezeigt und detailliert beschrieben ist, sollte dies als rein beispielhaft und für die Erfindung als nicht einschränkend angesehen werden. Es wird darauf hingewiesen, daß nur das bevorzugte Ausführungsbeispiel dargestellt und beschrieben ist und der Schutzumfang nur durch die Patentansprüche festgelegt ist.

### Bezugszeichenliste

- 10: System zum elektronischen Fernauslesen von Verbrauchsdaten
- 12: Mehrparteienhaus
- 14a, 14b, 14c: nicht fernauslesbarer Stromzähler
- 16: Niederspannungs-Stromleitung
- 18: fernauslesbarer Stromzähler
- 20: Kommunikationseinrichtung des fernauslesbaren Stromzählers 18
- 22: Gaszähler
- 24: Wasserzähler
- 26: Fernwärmezähler
- 28: OCR-Modul
- 30: lokaler Datenkanal
- 32, 32a, 32b: Versorger-Datenkanal
- 33: Auslesestelle
- 34: Konzentrator
- 36: Netztransformationsstation
- 38: Mobilfunkeinrichtung
- 40: Verbrauchszählerabschnitt
- 42: Elektronische Datenverarbeitungseinheit
- 44: Funk-Empfänger
- 46: PLC-Schnittstelle
- 48: Signalleitung

## Patentansprüche

1. System (10) zum elektronischen Fernauslesen von Verbrauchsdaten, umfassend eine Mehrzahl von fernauslesbaren Stromzählern (18), die verbraucherseitig vorgesehen sind, über einen Versorger-Datenkanal (32) kommunikativ mit einer Auslesestelle (33) eines Versorgers verbunden sind und jeweils eine Kommunikationseinrichtung (20) umfassen, die geeignet ist, Daten über den Versorger-Datenkanal zur Auslesestelle (33) zu kommunizieren,
**dadurch gekennzeichnet, daß** das System ferner eine Mehrzahl von OCR-Modulen (28) umfaßt, welche geeignet sind, mit Gaszählern (22) und/oder Wasserzählern (24) und/oder Fernwärmezählern (26) und/oder anderen Verbrauchszählern, insbesondere weiteren nicht fernauslesbaren Stromzählern (14c), gekoppelt zu werden und deren Zählerstände mittels optischer Zeichenerkennung auszulesen, wobei ein jedes OCR-Modul (28) über einen lokalen Datenkanal (30) kommunikativ mit einem zugehörigen fernauslesbaren Stromzähler (18) verbunden ist, und
die Kommunikationseinrichtung (20) eines jeden fernauslesbaren Stromzählers (18) geeignet ist, die von einem OCR-Modul (28) über den lokalen Datenkanal (30) gesendeten Daten über den Versorger-Datenkanal (32) zur Auslesestelle (33) des Versorgers zu senden.

2. System (10) nach Anspruch 1, bei dem der lokale Datenkanal (30) durch eine Funkübertragung zwischen dem OCR-Modul (28) und der Kommunikationseinrichtung (20) des fernauslesbaren Stromzählers (18) gebildet wird.

3. System (10) nach Anspruch 1 oder 2, bei dem die Kommunikationseinrichtung (20) eine Schnittstelle (46) zum Übertragen von Daten auf die Niederspannungsleitung (16), über die der Verbraucher mit Strom versorgt wird, umfaßt, und zumindest ein Abschnitt (32a) des Versorger-Datenkanals durch die Niederspannungsleitung (16) gebildet wird.

4. System (10) nach Anspruch 3, bei dem der Versorger-Datenkanal (32) einen Konzentrator (34) umfaßt, an dem die über die Niederspannungsleitung (16) gesendeten Verbrauchsdaten mehrerer Verbraucher gesammelt werden.

5. System (10) nach Anspruch 4, bei dem der Konzentrator (34) in einer Transformatorstation (36) vorgesehen ist.

6. System (10) nach Anspruch 4 oder 5, bei dem eine Mehrzahl von Konzentratoren (34) vorgesehen ist und bei dem zumindest einige der Konzentratoren (34) mit einer Kommunikationseinrichtung (38) versehen sind, die geeignet ist, die gesammelten Verbrauchsdaten zu der Auslesestelle (33) des Versorgers zu senden.

7. System (10) nach Anspruch 6, bei dem die Konzentrator-Kommunikationseinrichtung (38) eine Mobilfunkeinrichtung ist.

8. System (10) nach einem der vorangehenden Ansprüche, bei dem die Auslesestelle (33) des Versorgers durch ein Datenverarbeitungszentrum des Versorgers gebildet ist.

9. System (10) nach einem der Ansprüche 1 bis 8, wobei die Stromzähler-Kommunikationseinrichtung (20) durch ein Kommunikationsmodul gebildet wird, welches baulich vom übrigen Teil des fernauslesbaren Stromzählers (18) getrennt ist.

10. System (10) nach Anspruch 9, wobei das Kommunikationsmodul (20) lösbar, insbesondere durch Steckverbindung mit dem fernauslesbaren Stromzähler (18) verbunden ist.

11. Verfahren zum elektronischen Fernauslesen von Verbrauchsdaten, umfassend die folgenden Schritte:
Auslesen von Zählerstandsinformationen mindestens eines Verbrauchszählers, insbesondere eines Gaszählers (22) und/oder eines Wasserzählers (24) und/oder eines Fernwärmezählers (26) und/oder eines nicht fernauslesbaren Stromzählers (14c) mit Hilfe eines OCR-Moduls (28),
Übertragen der Zählerstandsinformation vom OCR-Modul (28) über einen lokalen Datenkanal (30) zu einer Kommunikationseinrichtung (20) eines fernauslesbaren Stromzählers (18), und
Übertragen der Verbrauchsdaten des mindestens einen Verbrauchszählers (14c, 22, 24, 26) über die Kommunikationseinrichtung (20) des fernauslesbaren Stromzählers (18) über einen Versorgerdatenkanal (32) zu einer Auslesestelle (33) des Versorgers.

12. Verfahren nach Anspruch 11, bei dem die Verbrauchsdaten von dem mindestens einen Verbrauchszähler (14c, 22, 24, 26) durch Funkübertragung zur Kommunikationseinrichtung (20) des fernauslesbaren Stromzählers (18) übertragen werden.

13. Verfahren nach Anspruch 11 oder 12, bei dem der Schritt des Übertragens der Zählerstandsinformationen des mindestens einen Verbrauchszählers (14c, 22, 24, 26) zur Auslesestelle (33) des Versorgers eine Datenübertragung über eine Niederspannungsleitung (16) umfaßt, mit der der fernauslesbare Stromzähler (18) gekoppelt ist.

14. Verfahren nach Anspruch 15, bei dem die Zählerstandsinformationen über die Niederspannungsleitung (16) zu einem Konzentrator (34) übertragen werden, der in einer Netztransformatorstation (36) angeordnet ist, und von dort über eine Mobilfunkeinrichtung (38) zu der Auslesestelle (33) des Versorgers übertragen werden.

## Claims

1. System (10) for remote access of consumption information, comprising a plurality of remotely readable electricity meters (18), which are provided on the consumer side, which are communicatively connected via a supplier data channel (32) to a readout position (33) of a supplier, and each of which comprising a communication device (20) which is capable of communicating data over the supplier data channel to the readout position (33),
**characterized in that**
the system further comprises a plurality of OCR modules (28), which are capable of being coupled to gas meters (22) and/or water meters (24) and/or remote heat meters (26) and/or other consumption meters, in particular additional non-remotely readable electricity meters (14c), and of reading the meter status information thereof by means of optical character recognition, wherein each OCR module (28) is communicatively connected via a local data channel (30) to an associated remotely readable electricity meter (18), and
**in that** the communication device (20) of the remotely readable electricity meter (18) is capable of sending the data, which are sent via the local data channel (30) by an OCR module (28), to the readout position (33) of the supplier via the supplier data channel (32).

2. System (10) according to Claim 1, in which the local data channel (30) is formed by a wireless transmission between the OCR module (28) and the communication device (20) of the remotely readable electricity meter (18).

3. System (10) according to Claim 1 or 2, in which the communication device (20) comprises an interface (46) for transmitting data onto the low-voltage cable (16) via which the consumer is supplied with electricity, and at least one section (32a) of the supplier data channel is formed by the low-voltage cable (16).

4. System (10) according to Claim 3, in which the supplier data channel (32) comprises a concentrator (34), at which the consumption data of a plurality of consumers sent via the low-voltage cable (16) are collected.

5. System (10) according to Claim 4, in which the concentrator (34) is provided in a transformer station (36).

6. System (10) according to Claim 4 or 5, in which a plurality of concentrators (34) is provided and in which at least some of the concentrators (34) are provided with a communication device (38) which is capable of sending the collected consumption data to the readout position (33) of the supplier.

7. System (10) according to Claim 6, in which the concentrator communication device (38) is a mobile wireless device.

8. System (10) according to any one of the previous claims, in which the readout position (33) of the supplier is formed by a data processing centre of the supplier.

9. System (10) according to any one of Claims 1 to 8, wherein the electricity meter communication device (20) is formed by a communication module which is physically separated from the remaining part of the remotely readable electricity meter (18).

10. System (10) or remotely readable electricity meter (18) according to Claim 9, wherein the communication module (20) is detachably connected, in particular by means of a plug connection, to the remotely readable electricity meter (18).

11. Method for remotely accessing consumption data, comprising the following steps:
reading out meter status information of at least one consumption meter, in particular a gas meter (22) and/or a water meter (24) and/or a remote heat meter (26) and/or a non-remotely readable electricity meter (14c) by means of an OCR module (28),
transmitting the meter status information from the OCR module (28) via a local data channel (30) to a communication device (20) of a remotely readable electricity meter (18), and
transmitting the consumption data of the at least one consumption meter (14c, 22, 24, 26) via the communication device (20) of the remotely readable electricity meter (18) over a supplier data channel (32) to a readout position (33) of the supplier.

12. Method according to Claim 11, in which the consumption data of the at least one consumption meter (14c, 22, 24, 26) are transmitted by wireless transmission to the communication device (20) of the remotely readable electricity meter (18).

13. Method according to Claim 11 or 12, in which the step of transmitting the meter status information of the at least one consumption meter (14c, 22, 24, 26) to the readout position (33) of the supplier comprises a data transmission via a low-voltage cable (16), to which the remotely readable electricity meter (18) is coupled.

14. Method according to Claim 15, in which the meter status information is transmitted over the low-voltage cable (16) to a concentrator (34), which is arranged in a mains transformer station (36), and from there is transmitted via a mobile wireless device (38) to the readout position (33) of the supplier.

## Revendications

1. Système (10) pour la lecture électronique à distance de données de consommation, comprenant une pluralité de compteurs de courant consultables à distance (18), prévus côté consommateur, reliés de manière communicative, par l'intermédiaire d'un canal de données du fournisseur (32), avec un point de lecture (33) d'un fournisseur et qui comprennent chacun un dispositif de communication (20) permettant de transmettre des données par l'intermédiaire du canal de données du fournisseur au point de lecture (33),
**caractérisé en ce que** le système comprend en outre une pluralité de modules OCR (28) qui peuvent être couplés avec des compteurs de gaz (22) et/ou des compteurs d'eau (24) et/ou des compteurs thermiques distants (26) et/ou d'autres compteurs de consommation, plus particulièrement d'autres compteurs de courant (14c) non consultables à distance et qui sont conçus pour lire les états des compteurs au moyen d'une reconnaissance optique de caractères, chaque module OCR (28) étant relié de manière communicative par l'intermédiaire d'un canal de données local (30) avec un compteur de courant (18) consultable à distance correspondant et
le dispositif de communication (20) de chaque compteur de courant (18) consultable à distance est conçu pour envoyer les données envoyées par un module OCR (28) par l'intermédiaire du canal de données local (30) par l'intermédiaire du canal de données du fournisseur (32), vers le point de lecture (33) du fournisseur.

2. Système (10) selon la revendication 1, dans lequel le canal de données local (30) est constitué d'une transmission radio entre le module OCR (28) et le dispositif de communication (20) du compteur de courant (18) consultable à distance.

3. Système (10) selon la revendication 1 ou 2, dans lequel le dispositif de communication (20) comprend une interface (46) pour la transmission de données sur la ligne basse tension (16), par l'intermédiaire de laquelle le consommateur est alimenté en courant et au moins une portion (32a) du canal de données du fournisseur est constituée de la ligne basse tension (16).

4. Système (10) selon la revendication 3, dans lequel le canal de données du fournisseur (32) comprend un concentrateur (34) au niveau duquel les données de consommation de plusieurs consommateurs, envoyées par l'intermédiaire de la ligne basse tension (16), sont collectées.

5. Système (10) selon la revendication 4, dans lequel le concentrateur (34) est prévu dans une station de transformateur (36).

6. Système (10) selon la revendication 4 ou 5, dans lequel une pluralité de concentrateurs (34) sont prévus et dans lequel au moins certains des concentrateurs (34) sont munis d'un dispositif de communication (38) qui est conçu pour envoyer les données de consommation collectées au point de lecteur (33) du fournisseur.

7. Système (10) selon la revendication 6, dans lequel le dispositif de communication du concentrateur (38) est un dispositif de téléphonie mobile.

8. Système (10) selon l'une des revendications précédentes, dans lequel le point de lecteur (33) du fournisseur est constitué d'un centre de traitement de données du fournisseur.

9. Système (10) selon l'une des revendications 1 à 8, le dispositif de communication du compteur de courant (20) étant constitué d'un module de communication qui est séparé physiquement du reste du compteur de courant (18) consultable à distance.

10. Système (10) selon la revendication 9, le module de communication (20) étant relié de manière amovible, plus particulièrement par emboîtement, avec le compteur de courant (18) consultable à distance.

11. Procédé de lecture électronique à distance de données de consommation comprenant les étapes suivantes :
lecture d'informations d'état de compteur d'au moins un compteur de consommation, plus particulièrement d'un compteur de gaz (22) et/ou d'un compteur d'eau (24) et/ou d'un compteur thermique à distance (26) et/ou d'un compteur de courant (14c) non consultable à distance, à l'aide d'un module OCR (28),
transmission des informations d'état du compteur par le module OCR (28) par l'intermédiaire d'un canal de donnée local (30) à un dispositif de communication (20) d'un compteur de courant (18) consultable à distance et
transmission des données de consommation de l'au moins un compteur de consommation (14c, 22, 24, 26) par l'intermédiaire du dispositif de communication (20) du compteur de courant (18) consultable à distance (18) par l'intermédiaire d'un canal de données de données du fournisseur (32) à un point de lecture (33) du fournisseur.

12. Procédé selon la revendication 11, dans lequel les données de consommation sont transmises par l'au moins un compteur de consommation (14c, 22, 24, 26) par transmission radio au dispositif de consommation (20) du compteur de courant (18) consultable à distance.

13. Procédé selon la revendication 11 ou 12, dans lequel l'étape de transmission des informations d'état de compteur de l'au moins un compteur de consommation (14c, 22, 24, 26) au point de lecture (33) du fournisseur comprend une transmission de données par l'intermédiaire d'une ligne basse tension (16) avec laquelle le compteur de courant (18) consultable à distance est couplé.

14. Procédé selon la revendication 15, dans lequel les informations d'état du compteur sont transmises par l'intermédiaire de la ligne basse tension (16) à un concentrateur (34) qui est disposé dans une station de transformateur (36) et de là sont transmises par l'intermédiaire d'un dispositif de téléphonie mobile (38) au point de lecture (33) du fournisseur.
